# EUROPÄISCHE PATENTSCHRIFT

(11) **EP 1 125 060 B1**
(45) Veröffentlichungstag und Bekanntmachung des Hinweises auf die Patenterteilung: **17.07.2002**
(21) Anmeldenummer: 99948867.9
(22) Anmeldetag: 25.09.1999
(51) Int. Cl.: F03D 7/04, F03D 7/02, H02P 9/04

(54) **STEUERLOGIK FÜR EINE WINDENERGIEANLAGE**
CONTROL LOGIC FOR A WIND ENERGY SYSTEM
LOGIQUE DE COMMANDE POUR CENTRALE EOLIENNE

(30) Priorität: 26.09.1998 DE 19844258
(43) Veröffentlichungstag der Anmeldung: 22.08.2001
(73) Patentinhaber: Dewind Technik GmbH, 23569 Lübeck (DE)
(72) Erfinder: SCHIPPMANN, Hugo, L., D-23552 Lübeck (DE)
(74) Vertreter: Vonnemann, Gerhard, Dr.-Ing.
(86) Internationale Anmeldenummer: EP9907142
(87) Internationale Veröffentlichungsnummer: WO0019094

(56) Entgegenhaltungen:
- DE-A- 19 532 409
- FR-A- 1 065 816
- LEITHEAD W E ET AL: "ROLE AND OBJECTIVES OF CONTROL FOR WIND TURBINES" , IEE PROCEEDINGS C. GENERATION, TRANSMISSION, DISTRIBUTION,GB,INSTITUTION OF ELECTRICAL ENGINEERS. STEVENAGE, VOL. 138, NR. 2 PART C, PAGE(S) 135-148 , STEVENAGE,HERTS, GB XP000219783 ISSN: 1350-2360 Seiten 145-146 , "Variable Speed Turbines"

## Beschreibung

Die Erfindung betrifft eine Windenergieanlage mit einem vom Wind antreibbaren Rotor mit winkelverstellbaren Rotorblättern, einem mit dem Rotor direkt oder indirekt verbundenem Generator zur Erzeugung elektrischer Energie, wobei die Leistungsabgabe des Generators bei variabler Rotordrehzahl möglich ist, und einem Betriebsführungssystem, das innerhalb eines vorgegebenen Windgeschwindigkeitsbereichs die Rotordrehzahl unter Verstellen der Rotorblattwinkel regelnd und den Betrieb der Anlage oberhalb einer Abschaltgeschwindigkeit abschaltend ausgebildet ist.

Eine derartige Windenergieanlage ist beispielsweise aus der WO 93/11604 bekannt. Solche Windenergieanlagen, die mit variabler Rotordrehzahl und variablen Rotorblattwinkeln arbeiten, erwirtschaften mehr elektrische Energie als Anlagen, die mit einer einzigen festen Rotordrehzahl und fest vorgegebenen Rotorblattwinkeln arbeiten.
Üblicherweise arbeitet man mit variabler Drehzahl im Bereich sehr geringer Windgeschwindigkeiten, wobei die Rotorblätter einen großen Winkel gegenüber dem einfallenden Wind einnehmen, der nur wenig kleiner ist als 90 Grad. Dieser Rotorblattwinkel wird bei zunehmenden Windgeschwindigkeiten zunächst nicht verändert, bis die Windgeschwindigkeit ausreicht, um den Rotor mit Nenndrehzahl zu drehen, wobei die Windenergieanlage ihre Nennleistung abgibt. Die Leistungsabgabe nimmt also ausgehend von einer sehr kleinen Leistung bei einer Mindestwindgeschwindigkeit zusammen mit der Rotordrehzahl zu, bis die Nennleistung erreicht ist. Bei weiter zunehmender Windgeschwindigkeit wird nunmehr die Nennleistung und die Nenndrehzahl möglichst konstant gehalten, indem die Rotorblätter immer weiter in Windrichtung verstellt werden, bis die Windgeschwindigkeit über eine Abschaltgeschwindigkeit ansteigt. Hier wird die Windenergieanlage abgeschaltet, indem die Rotorblätter vollkommen in Windrichtung gedreht werden, so daß die Rotorblattwinkel gegenüber der Windrichtung etwa null Grad betragen. Dadurch wird der Rotor abgebremst. Die Abschaltung bei sehr hohen Windgeschwindigkeiten ist notwendig, weil die Belastung der Windenergieanlage im Betrieb bei Starkwind, insbesondere bei Böen, so groß werden kann, daß Beschädigungen auftreten.

Bei bekannten Windenergieanlagen wird die Rotordrehzahl bis zum Erreichen der Abschaltgeschwindigkeit konstant geregelt, wobei die Nennleistung abgegeben wird. Bei Überschreiten der Abschaltgeschwindigkeit wird die Rotordrehzahl durch Verstellen der Rotorblattwinkel in Fahnenstellung auf Null heruntergeregelt. Dabei müssen diese Windenergieanlagen selbstverständlich so stark dimensioniert werden, daß sie bis zum Erreichen der Abschaltwindgeschwindigkeit noch mit Nennleistung und Nenndrehzahl betrieben werden können.

Eine derartige Windenergieanlage ist ebenfalls aus der DE 195 32 409 A1 bekannt und dahingehend weitergebildet, daß sie oberhalb der üblichen Abschaltgeschwindigkeit mit verminderter leistung betrieben wird, um den Ertrag der Windenergieanlage bei gleichzeitiger Begrenzung der Belastung zu erhöhen.

Aufgabe der Erfindung ist es, eine Windenergieanlage der eingangs genannten Art anzugeben, die schwächer dimensioniert sein kann und in der Herstellung kostengünstiger ist.

Die Erfindung löst diese Aufgabe dadurch, daß das Betriebsführungssystem die Rotordrehzahl und die Leistungsabgabe unter Verstellen der Rotorblattwinkel in einem Bereich zwischen einer vorgegebenen Grenzgeschwindigkeit und der Abschaltgeschwindigkeit herunterregelnd ausgebildet ist. Aufgrund der erfindungsgemäßen Regelung wird die Belastung der Windenergieanlage bei Windgeschwindigkeiten oberhalb der Grenzgeschwindigkeit in etwa konstant gehalten oder sogar verringert, so daß die Dimensionierung der Windenergieanlage nicht auf die relativ hohe Abschaltgeschwindigkeit sondern nur auf die relativ geringe Grenzgeschwindigkeit abgestimmt werden muß. Die schwächer dimensionierte Windenergieanlage kann unter erheblicher Material- und Energieeinsparung sehr viel kostengünstiger gefertigt werden als bekannte Windenergieanlagen. Dabei ist der Verlust an gewonnener elektrischer Energie aufgrund der im Bereich zwischen Grenzgeschwindigkeit und Abschaltgeschwindigkeit reduzierten Leistungsabgabe vernachlässigbar klein, denn Windgeschwindigkeiten in diesem Bereich kommen bei mitteleuropäischen Standorten relativ selten vor, so daß die erfindungsgemäße Windenergieanlage im Jahresmittel kaum weniger Energie produziert als die bekannten Anlagen.

Um eine optimale Energieausbeute bei verschiedenen Windgeschwindigkeiten zu erhalten, wird vorgeschlagen, daß das Betriebsführungssystem bei ausreichenden Windgeschwindigkeiten unterhalb der vorgegebenen Grenzgeschwindigkeit die Leistungsabgabe im wesentlichen auf den Wert der Nennleistung der Anlage regelnd ausgebildet ist. In diesem Windgeschwindigkeitsbereich ist die Belastung der Windenergieanlage noch relativ gering, so daß die Leistungsabgabe bedenkenlos bis zur höchsten Dauerleistung geregelt werden kann.

In Weiterbildung der Erfindung ist vorgesehen, daß das Betriebsführungssystem die Leistungsabgabe ausgehend von der Nennleistung mit zunehmender Windgeschwindigkeit oberhalb der vorgegebenen Grenzgeschwindigkeit bis zur Abschaltgeschwindigkeit stetig abnehmend herunterregelnd ausgebildet ist. Durch diese Maßnahme wird eine höchstmögliche Leistungsabgabe gewährleistet, ohne daß die höchstzulässige mechanische Belastung der Windenergieanlage überschritten wird. Insbesondere kann die Regelung so ausgebildet sein, daß die mechanische Belastung bei jeder Windgeschwindigkeit innerhalb des genannten Geschwindigkeitsbereichs konstant bleibt.

In erster Näherung kann die mit der Windgeschwindigkeit zunehmende Belastung durch eine proportionale Abnahme der Rotordrehzahl ausgeglichen werden, so daß die Gesamtbelastung im wesentlichen konstant bleibt. Eine einfache Ausführungsform der Erfindung besteht daher in der Maßnahme, daß das Betriebsführungssystem die Leistungsabgabe und die Rotordrehzahl unterhalb der vorgegebenen Grenzgeschwindigkeit, soweit möglich, konstant auf die Nennleistung / Nenndrehzahl und oberhalb der Grenzgeschwindigkeit bis zur Abschaltgeschwindigkeit im wesentlichen linear abnehmend regelnd ausgebildet ist. Mit dieser sehr einfachen Regelungsstrategie kann bei gegebener Belastbarkeit der Windenergieanlage ein Optimum an elektrischer Energie erwirtschaftet werden.

In einer bevorzugten Ausgestaltungsform der Erfindung ist vorgesehen, daß das Betriebsführungssystem die Leistungsabgabe bei der Abschaltgeschwindigkeit auf etwa 40% der Nennleistung regelnd ausgebildet ist. Bei dieser Regelung wird bis zum Erreichen der Abschaltgeschwindigkeit noch relativ viel elektrische Energie erwirtschaftet. Bei der üblichen Baugröße von Windenergieanlagen mit elektrischen Nennleistungen von etwa 1 Megawatt erhält man einen besonders wirtschaftlichen Betrieb, wenn das Betriebsführungssystem die Leistungsabgabe im Windgeschwindigkeitsbereich von etwa 11,5 m/sek bis etwa 16 m/sek auf die Nennleistung regelnd ausgebildet ist. Bei derartigen Windenergieanlagen kann die Dimensionierung vorteilhaft gering gewählt werden, wenn die Grenzgeschwindigkeit etwa 16 m/sek und die Abschaltgeschwindigkeit etwa 23 m/sek beträgt.

Gegenstand der Erfindung ist auch ein Verfahren zur Regelung der Leistungsabgabe einer Windenergieanlage gemäß der obigen Beschreibung.

Ein Ausführungsbeispiel der Erfindung wird nachfolgend anhand der Zeichnungen näher erläutert.

Die Figuren zeigen im einzelnen:

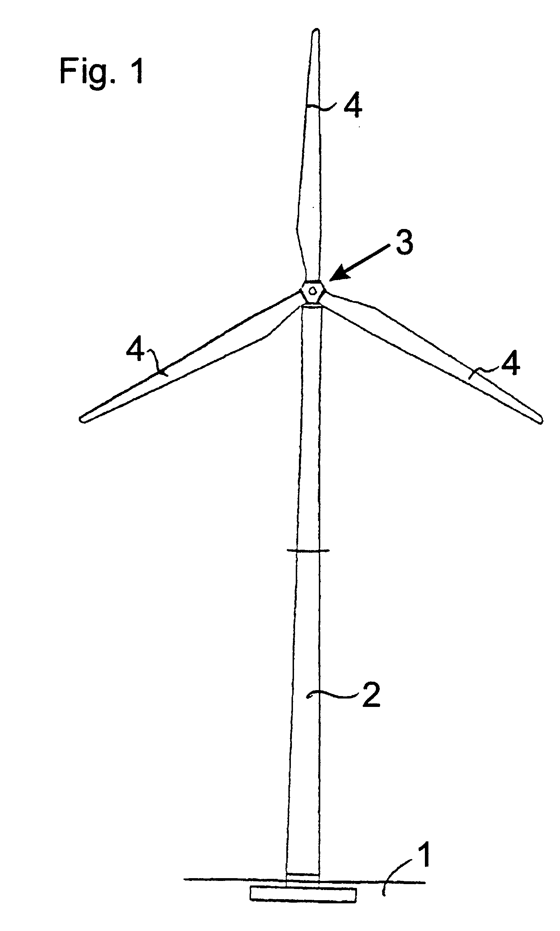

- Figur 1:: eine Draufsicht auf eine Windenergieanlage;
- Figur 2:: ein winkelverstellbares Rotorblatt im Schnitt;
- Figur 3:: eine schematische Darstellung der Funktionsweise der Windenergieanlage;
- Figur 4:: ein Diagramm mit den erfindungsgemäß geregelten Verläufen von Rotordrehzahl und abgegebener Leistung in Abhängigkeit von der Windgeschwindigkeit.

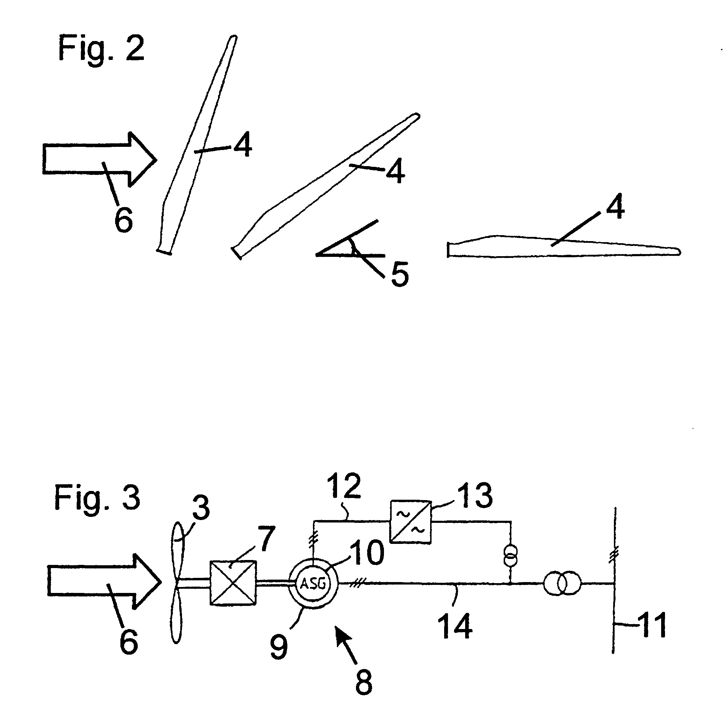

Die dargestellte erfindungsgemäße Windenergieanlage weist einen im Erdboden (1) verankerten Mast (2) und einen an der Oberseite des Mastes (2) montierten Rotor (3) mit drei Rotorblättern (4) auf. Wie in Figur 2 gezeigt, sind die Rotorblattwinkel (5) gegenüber der Windrichtung (6) verstellbar ausgebildet. Wie man in der schematischen Darstellung von Figur 3 erkennt ist der Rotor (3) über ein Getriebe (7) mit einem elektrischen Asynchrongenerator (8) mechanisch verbunden. Der Ständer (9) des Generators (8) ist elektrisch mit dem Netz (11) verbunden. Dabei sind Netzfrequenz und im Ständer erzeugte Frequenz miteinander synchronisiert. Der Läufer (10) des Generators (8) wird über die Leitungen (12) von einem Frequenzumrichter (13) elektrisch versorgt, welcher seinerseits mit den Leitungen (14) zwischen Ständer (9) und Netz (11) in Verbindung steht. Mit Hilfe der vom Frequenzumrichter (13) erzeugten frequenzvariablen Läuferströme kann im Läufer (10) trotz variabler Rotorgeschwindigkeit ein mit der Netzfrequenz rotierendes Drehfeld erzeugt werden, wobei die Frequenz der im Ständer (9) erzeugten Ströme mit der Netzfrequenz synchronisiert werden. Damit ist die Leistungsabgabe des Generators (8) bei variabler Rotordrehzahl möglich.

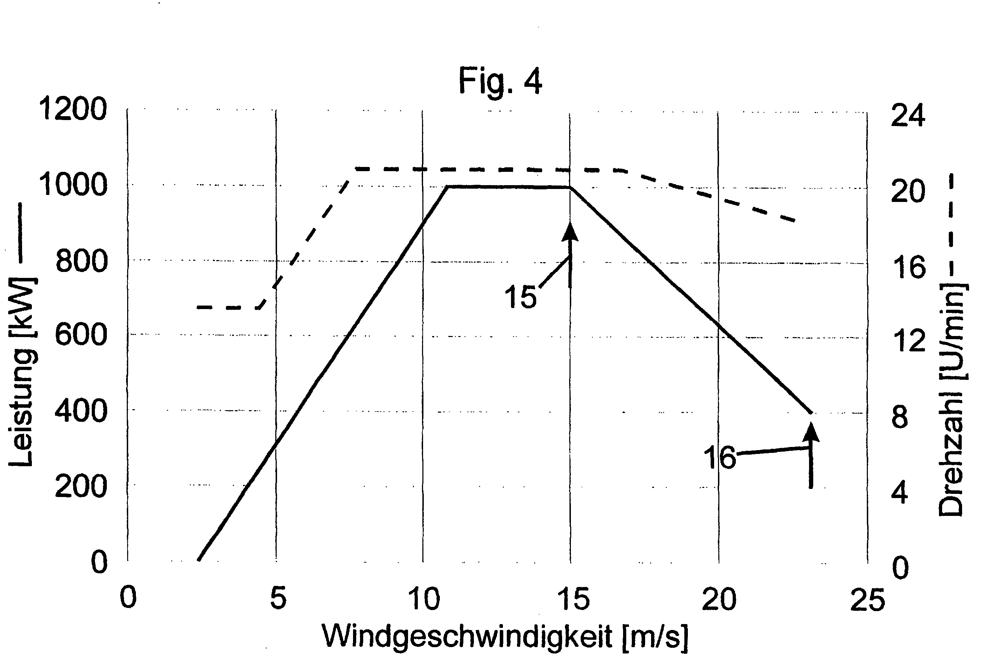

Die vom Generator (8) in das Netz (11) abgegebene Leistung, die Rotordrehzahl und die Einstellung der Rotorblattwinkel werden von einem nicht gezeigten Betriebsführungssystem überwacht und geregelt. Figur 4 zeigt den erfindungsgemäßen Regelungsverlauf der abgegebenen Leistung und der Rotordrehzahl in Abhängigkeit von der Windgeschwindigkeit.

Der Betrieb der Windenergieanlage wird gestartet, sobald eine Mindestwindgeschwindigkeit von 2,5 m/sek oder mehr auftritt, wobei eine Rotordrehzahl von 14 Umdrehungen pro Minute erreicht wird. Bei zunehmender Windgeschwindigkeit steigert sich die Rotordrehzahl, bis die Nenndrehzahl von etwa 21 Umdrehungen pro Minute erreicht ist. Dies ist ungefähr bei einer Windgeschwindigkeit von 7,5 m/sek der Fall. In dem Bereich variabler Rotorgeschwindigkeit werden die Rotorblattwinkel (5) sehr steil eingestellt, so daß sie etwa 70 Grad bis 80 Grad gegenüber der Windrichtung (6) betragen.

Bei höheren Windgeschwindigkeiten als 7,5 m/sek werden die Rotorblattwinkel kleiner eingestellt, so daß die Rotordrehzahl konstant bei ca. 21 m/sek bleibt. Dabei regelt das Betriebsführungssystem Frequenz und Stärke der dem Läufer (10) des Generators (8) aufgeprägten Ströme derart, daß die vom Generator (8) an das Netz (11) abgegebene Leistung stetig zunimmt. Ab einer Windgeschwindigkeit von ca. 11,5 m/sek wird die Nennleistung von einem Megawatt erreicht. Die Nennleistung darf auf die Dauer nicht überschritten werden, deshalb ist das Betriebsführungssystem so ausgebildet, daß die abgegebene Leistung konstant auf Nennleistung gehalten wird, wobei die Rotorblattwinkel (5) derart geregelt werden, daß auch die Rotordrehzahl weitgehend konstant auf der Nenndrehzahl von ungefähr 21 Umdrehungen pro Minute gehalten wird.

Wenn die Windgeschwindigkeit eine im Betriebsführungssystem vorgegebene Grenzgeschwindigkeit (15) überschreitet, die bei der vorliegenden Windenergieanlage bei 16 m/sek liegt, geht das Betriebsführungssystem dazu über, die Leistungsabgabe herunterzuregeln, um die mechanische Belastung der Windenergieanlage, insbesondere des Mastes (2), der Rotorblätter (4), des Getriebes (7) und des Generators (8) zu begrenzen. Aufgrund der Begrenzung der Belastung können die genannten und gegebenenfalls auch weitere Komponenten der Windenergieanlage deutlich schwächer dimensioniert werden als bei Anlagen die bis zur Abschaltgeschwindigkeit (16) mit der Nennleistung gefahren werden.

Ausgehend von der Nennleistung regelt das Betriebsführungssystem nun die Leistungsabgabe mit zunehmender Windgeschwindigkeit oberhalb der vorgegebenen Grenzgeschwindigkeit (15) bis zur Abschaltgeschwindigkeit (16) linear herunter, wobei kurz vor Erreichen der Abschaltgeschwindigkeit (16) noch eine Leistungsabgabe von 400 kW erfolgen kann. Die Rotordrehzahl wird in dem Bereich zwischen der Grenzgeschwindigkeit (15) und der Abschaltgeschwindigkeit (16) von der Nenndrehzahl auf 18 Umdrehungen pro Minute heruntergeregelt, indem die Rotorblattwinkel (5) vom Betriebsführungssystem immer kleiner eingestellt werden, wobei die Ebenen der Rotorblätter immer mehr in Richtung Windgeschwindigkeit ausgerichtet werden. Die Abschaltwindgeschwindigkeit beträgt im vorliegenden Fall 23 m/sek. Hier werden die Rotorblätter wie ganz rechts in Figur 2 gezeigt in Fahnenstellung gebracht, wobei die Rotorblätter (4) in Windrichtung (6) ausgerichtet sind (Rotorblattwinkel 5 = 0°). Dadurch kommt der Rotor (3) zum Stehen und die Windenergieanlage kann abgeschaltet werden.

### Bezugszeichenliste

- 1: Erdboden
- 2: Mast
- 3: Rotor
- 4: Rotorblatt
- 5: Rotorblattwinkel
- 6: Windrichtung
- 7: Getriebe
- 8: Asynchrongenerator
- 9: Ständer
- 10: Läufer
- 11: Netz
- 12: Leitungen
- 13: Frequenzumrichter
- 14: Leitungen
- 15: Grenzgeschwindigkeit
- 16: Abschaltgeschwindigkeit

## Patentansprüche

1. Windenergieanlage mit einem vom Wind antreibbaren Rotor (3) mit winkelverstellbaren Rotorblättern (4), einem mit dem Rotor (3) direkt oder indirekt verbundenen Generator (8) zur Erzeugung elektrischer Energie, wobei die Leistungsabgabe des Generators (8) bei variabler Rotordrehzahl möglich ist, und einem Betriebsführungssystem, das innerhalb eines vorgegebenen Windgeschwindigkeitsbereichs die Rotordrehzahl unter Verstellen der Rotorblattwinkel (5) regelnd und den Betrieb der Anlage oberhalb einer üblichen Abschaltgeschwindigkeit (16) von etwa 23m/sek abschaltend ausgebildet ist, **dadurch gekennzeichnet, daß** das Betriebsführungssystem die Rotordrehzahl und die Leistungsabgabe unter Verstellen der Rotorblattwinkel (5) in einem Bereich zwischen einer vorgegebenen Grenzgeschwindigkeit (15) und der Abschaltgeschwindigkeit (16) herunterregelnd ausgebildet ist.

2. Windenergieanlage nach Anspruch 1, **dadurch gekennzeichnet, daß** das Betriebsführungssystem bei ausreichenden Windgeschwindigkeiten unterhalb der vorgegebenen Grenzgeschwindigkeit (15) die Leistungsabgabe im wesentlichen auf den Wert der Nennleistung der Anlage regelnd ausgebildet ist.

3. Windenergieanlage nach Anspruch 2, **dadurch gekennzeichnet, daß** das Betriebsführungssystem die Leistungsabgabe ausgehend von der Nennleistung mit zunehmender Windgeschwindigkeit oberhalb der vorgegebenen Grenzgeschwindigkeit (15) bis zur Abschaltgeschwindigkeit (16) stetig abnehmend herunterregelnd ausgebildet ist.

4. Windenergieanlage nach Anspruch 3, **dadurch gekennzeichnet, daß** das Betriebsführungssystem die Leistungsabgabe und die Rotordrehzahl unterhalb der vorgegebenen Grenzgeschwindigkeit (15), soweit möglich, konstant auf die Nennleistung / Nenndrehzahl und oberhalb der Grenzgeschwindigkeit (15) bis zur Abschaltgeschwindigkeit (16) im wesentlichen linear abnehmend regelnd ausgebildet ist.

5. Windenergieanlage nach einem der vorhergehenden Ansprüche, **dadurch gekennzeichnet, daß** das Betriebsführungssystem die Leistungsabgabe bei der Abschaltgeschwindigkeit (16) auf etwa 40% der Nennleistung regelnd ausgebildet ist.

6. Windenergieanlage nach einem der vorhergehenden Ansprüche, **dadurch gekennzeichnet, daß** das Betriebsführungssystem die Leistungsabgabe im Windgeschwindigkeitsbereich von etwa 11,5 m/sek bis etwa 16 m/sek auf die Nennleistung regelnd ausgebildet ist.

7. Windenergieanlage nach einem der vorhergehenden Ansprüche, **dadurch gekennzeichnet, daß** die Grenzgeschwindigkeit (15) etwa 16 m/sek beträgt.

8. Verfahren zur Regelung der Leistungsabgabe einer Windenergieanlage nach einem der vorhergehenden Ansprüche, **dadurch gekennzeichnet, daß** die Rotordrehzahl und die Leistungsabgabe unter Verstellen der Rotorblattwinkel (5) in einem Bereich zwischen einer vorgegebenen Grenzgeschwindigkeit (15) und einer üblichen Abschaltgeschwindigkeit (16) von etwa 23m/sek heruntergeregelt wird.

9. Verfahren nach Anspruch 8, **dadurch gekennzeichnet, daß** bei ausreichenden Windgeschwindigkeiten unterhalb der vorgegebenen Grenzgeschwindigkeit (15) die Leistungsabgabe im wesentlichen auf den Wert der Nennleistung geregelt wird.

10. Verfahren nach Anspruch 9, **dadurch gekennzeichnet, daß** die Leistungsabgabe ausgehend von der Nennleistung mit zunehmender Windgeschwindigkeit oberhalb der vorgegebenen Grenzgeschwindigkeit (15) bis zur Abschaltgeschwindigkeit (16) stetig abnehmend heruntergeregelt wird.

11. Verfahren nach Anspruch 10, **dadurch gekennzeichnet, daß** die Leistungsabgabe und die Rotordrehzahl unterhalb der vorgegebenen Grenzgeschwindigkeit, soweit möglich, konstant auf die Nennleistung / Nenndrehzahl und oberhalb der Grenzgeschwindigkeit (15) bis zur Abschaltgeschwindigkeit (16) im wesentlichen linear abnehmend geregelt wird.

12. Verfahren nach einem der Ansprüche 8 bis 11, **dadurch gekennzeichnet, daß** die Leistungsabgabe bei der Abschaltgeschwindigkeit (16) auf etwa 40% der Nennleistung geregelt wird.

13. Verfahren nach einem der Ansprüche 8 bis 12, **dadurch gekennzeichnet, daß** die Leistungsabgabe im Windgeschwindigkeitsbereich von etwa 11,5 m/sek bis etwa 16 m/sek auf die Nennleistung geregelt wird.

14. Verfahren nach einem der Ansprüche 8 bis 13, **dadurch gekennzeichnet, daß** die Grenzgeschwindigkeit (15) etwa 16 m/sek beträgt.

## Claims

1. A wind energy plant comprising a wind-drivable rotor (3) with angularly adjustable rotor blades (4), a generator (8) directly or indirectly connected to the rotor (3), for generating electrical energy, wherein power output of the generator (8) is possible at variable rotor speeds, and an operations management system which is designed to regulate the rotor speed within a predetermined wind speed range, by adjusting the rotor blade angle (5), and to shut down operation of the plant above a normal shutdown speed (16) of approx. 23 m/sec, **characterised in that** the operations management system is designed to regulate down the rotor speed and the power output, by adjusting the rotor blade angle (5) in a range between a predetermined limit speed (15) and the shutdown speed (16).

2. The wind energy plant according to claim 1, **characterised in that** the operations management system is designed so as to regulate power output during adequate wind speeds below the predetermined limit speed (15), essentially to the value of the nominal output of the plant.

3. The wind energy plant according to claim 2, **characterised in that** the operations management system is designed such that, starting with the nominal output, as the wind speed increases above the predetermined limit speed (15) until it reaches shutdown speed (16), said operations management system gradually regulates the power output down.

4. The wind energy plant according to claim 3, **characterised in that** below the predetermined limit speed (15), the operations management system regulates the power output and the rotor speed as far as possible so as to be constant with the nominal output / nominal speed; while above the limit speed (15) and until the shutdown speed (16) has been reached, said operations management system regulates the power output and the rotor speed so as to be essentially linearly decreasing.

5. The wind energy plant according to one of the preceding claims, **characterised in that** the operations management system is designed such that at the shutdown speed (16) it regulates the power output so as to be approx. 40 % of the nominal output.

6. The wind energy plant according to one of the preceding claims, **characterised in that** the operations management system is designed to regulate power output in the wind speed range of approx. 11.5 m/sec to approx. 16 m/sec so as to be at the nominal output.

7. The wind energy plant according to one of the preceding claims, **characterised in that** the limit speed (15) is approx. 16 m/sec.

8. A method for regulating the power output of a wind energy plant according to one of the preceding claims **characterised in that** the rotor speed and the power output are regulated down by adjusting the rotor blade angle (5) in a region between a predetermined limit speed (15) and a usual shutdown speed (16) of approx. 23 m/sec.

9. A method according to claim 8, **characterised in that** during adequate wind speeds below the predetermined limit speed (15), the power output is essentially regulated so as to be at the value of the nominal output.

10. The method according to claim 9, **characterised in that** starting with the nominal output, as the wind speed increases above the predetermined limit speed (15) until it reaches shutdown speed (16), the power output is gradually regulated down.

11. The method according to claim 10, **characterised in. that** below the predetermined limit speed, the power output and the rotor speed are regulated as far as possible so as to be constant with the nominal output / nominal speed, while above the limit speed (15) and until the shutdown speed (16) has been reached, said power output and rotor speed are regulated so as to be essentially linearly decreasing.

12. The method according to one of claims 8 to 11, **characterised in that** the power output at the shutdown speed (16) is regulated so as to be approx. 40 % of the nominal output.

13. The method according to one of claims 8 to 12, **characterised in that** the power output in the wind speed range of approx. 11.5 m/sec to approx. 16 m/sec is regulated so as to be at the nominal output.

14. The method according to one of claims 8 to 13, **characterised in that** the limit speed (15) is approx. 16 m/sec.

## Revendications

1. Centrale éolienne avec un rotor (3) pouvant être entraîné par le vent avec des pales de rotor (4) dont les angles sont réglables, un générateur (8) relié directement ou indirectement au rotor (3) pour la production d'énergie électrique, la fourniture de puissance par le générateur (8) étant possible en cas de régime variable du rotor, et un système de commande qui est conçu de manière à régler le régime du rotor, dans une fourchette prédéfinie de vitesse du vent, en ajustant les angles des pales du rotor (5) et à stopper le fonctionnement de la centrale au dessus d'une vitesse usuelle de décrochage (16) d'environ 23 m/sec., **caractérisée en ce que** le système de commande est conçu de manière à régler vers le bas le régime du rotor et la puissance fournie en ajustant les angles des pales du rotor (5) dans une fourchette entre une vitesse limite (15) prédéfinie et la vitesse de décrochage (16).

2. Centrale éolienne selon la revendication 1, **caractérisée en ce que** le système de commande est conçu de manière à ajuster, en cas de vitesses de vent suffisantes en dessous de la vitesse limite prédéfinie (15), la puissance fournie approximativement à la valeur de la puissance nominale de la centrale.

3. Centrale éolienne selon la revendication 2, **caractérisée en ce que** le système de commande est conçu de manière à régler vers le bas en baisse constante la puissance fournie, en partant de la puissance nominale, au fur et à mesure que la vitesse du vent augmente au dessus de la vitesse limite prédéfinie (15) jusqu'à la vitesse de décrochage (16).

4. Centrale éolienne selon la revendication 3, **caractérisée en ce que** le système de commande est conçu de manière à ajuster la puissance fournie et le régime du rotor en dessous de la vitesse limite prédéfinie (15), dans la mesure du possible, constamment à la puissance nominale/au régime nominal et, au dessus de la vitesse limite (15) jusqu'à la vitesse de décrochage (16), globalement en baisse linéaire.

5. Centrale éolienne selon une des revendications précédentes, **caractérisée en ce que** le système de commande est conçu de manière à régler la puissance fournie à la vitesse de décrochage (16) à environ 40 % de la puissance nominale.

6. Centrale éolienne selon une des revendications précédentes, **caractérisée en ce que** le système de commande est conçu de manière à ajuster la puissance fournie, dans une fourchette de vitesse du vent d'environ 11,5 m/sec. à environ 16 m/sec., à la puissance nominale.

7. Centrale éolienne selon une des revendications précédentes, **caractérisée en ce que** la vitesse limite (15) est d'environ 16 m/sec.

8. Procédé pour le réglage de la puissance fournie d'une centrale éolienne selon une des revendications précédentes, **caractérisé en ce que** le régime du rotor et la puissance fournie sont réglés vers le bas en ajustant les angles des pales du rotor (5) dans une fourchette entre une vitesse limite prédéfinie (15) et une vitesse de décrochage usuelle (16) d'environ 23 m/sec.

9. Procédé selon la revendication 8, **caractérisé en ce que**, en cas de vitesses de vent suffisantes en dessous de la vitesse limite (15), la puissance fournie est réglée globalement à la valeur de la puissance nominale.

10. Procédé selon la revendication 9, **caractérisé en ce que** la puissance fournie est réglée vers le bas en baisse constante, en partant de la puissance nominale, au fur et à mesure que la vitesse du vent augmente au dessus de la vitesse limite prédéfinie (15) jusqu'à la vitesse de décrochage (16).

11. Procédé selon la revendication 10, **caractérisé en ce que** la puissance fournie et le régime du rotor sont réglés, en dessous de la vitesse limite prédéfinie, dans la mesure du possible, constamment à la puissance nominale/au régime nominal et, au dessus de la vitesse limite (15) jusqu'à la vitesse de décrochage (16), globalement en baisse linéaire.

12. Procédé selon une des revendications 8 à 11, **caractérisé en ce que** la puissance fournie à la vitesse de décrochage (16) est réglée à environ 40 % de la puissance nominale.

13. Procédé selon une des revendications 8 à 12, **caractérisé en ce que** la puissance fournie, dans la fourchette de vitesse de vent d'environ 11,5 m/sec. à environ 16 m/sec., est réglée à la puissance nominale.

14. Procédé selon une des revendications 8 à 13, **caractérisé en ce que** la vitesse limite (15) est d'environ 16 m/sec.
